# EUROPÄISCHE PATENTSCHRIFT

(11) **EP 2 935 944 B1**
(45) Veröffentlichungstag und Bekanntmachung des Hinweises auf die Patenterteilung: **02.11.2016**
(21) Anmeldenummer: 13824302.7
(22) Anmeldetag: 28.11.2013
(51) Int. Cl.: F16H 55/36

(54) **ENTKOPPLER ZUR DÄMPFUNG EINER DREHMOMENTÜBERTRAGUNG ZWISCHEN EINER ANTRIEBSWELLE EINES KRAFTFAHRZEUGS UND EINER RIEMENSCHEIBE**
DECOUPLER FOR DAMPING A TORQUE TRANSMISSION BETWEEN A DRIVE SHAFT OF A MOTOR VEHICLE AND A BELT PULLEY
DÉCOUPLEUR POUR L'AMORTISSEMENT D'UNE TRANSMISSION DE COUPLE ENTRE UN ARBRE D'ENTRAÎNEMENT D'UN VÉHICULE AUTOMOBILE ET UNE POULIE

(30) Priorität: 19.12.2012 DE 102012223728
(43) Veröffentlichungstag der Anmeldung: 28.10.2015
(73) Patentinhaber: Schaeffler Technologies AG & Co. KG, 91074 Herzogenaurach (DE)
(72) Erfinder: MENDE, Hartmut, 77815 Bühl (DE); KROLL, Jürgen, 77815 Bühl (DE)
(86) Internationale Anmeldenummer: PCT/DE2013/200321
(87) Internationale Veröffentlichungsnummer: WO 2014/094760

(56) Entgegenhaltungen:
- WO-A1-2011/127898
- DE-A1-102011 086 185
- DE-U1-202007 005 899
- JP-A- H10 252 857

## Beschreibung

Die Erfindung betrifft einen Entkoppler zur Dämpfung einer Drehmomentübertragung zwischen einer Antriebswelle eines Kraftfahrzeugs und einer Riemenscheibe, mit deren Hilfe Drehungleichförmigkeiten der Antriebswelle zumindest gedämpft werden können, so dass über ein Zugmittel an die Riemenscheibe angebundenen Nebenaggregate gleichförmiger angetrieben werden können.

Aus WO 2005/028899 A1 ist ein Kurbelwellenriemenscheibenentkoppler für ein Kraftfahrzeug bekannt, wobei eine mit einer Kurbelwelle des Kraftfahrzeugs verbundene Nabe radial abstehende Ansätze aufweist, die über in Umfangsrichtung verlaufende Bogenfedern mit einem Federgehäuse, in dem die Bogenfedern angeordnet sind, gekoppelt sind. Das Federgehäuse ist mit einer das Federgehäuse radial außen umlaufenden Spiralfeder verbunden, die bei einem Momenteneintrag in Antriebsrichtung sich erweitert und einen Reibschluß mit einer Riemenscheibe herbeiführt, um das eingeleitete Drehmoment an die Riemenscheibe zu übertragen.

Aus DE 10 2009 004 713 A1 ist ein Riemenscheibendämpfer bekannt, der ein mit einer Antriebswelle verbindbaren Eingangsflansch aufweist. Mit dem Eingangsflansch ist über eine Freilaufeinrichtung ein Drehschwingungsdämpfer verbunden, der wiederum direkt mit einer Riemenscheibe verbunden ist. Die in Kraftflussrichtung zwischen dem Eingangsflansch und dem Drehschwingungsdämpfer angeordneten Freilaufeinrichtung weist aus einer Grundebene herausgebogene Rampen auf, durch die ein Freilauf in der Art einer Ratsche ausgebildet wird. In Schubrichtung kann eine Ausgangsscheibe der Freilaufeinrichtung an den angeschrägten Flanken der herausgebogenen Rampen entlanggleiten, wodurch die Ausgangsscheibe axial verschoben wird ohne ein Drehmoment von dem Eingangsflansch an die Ausgangsscheibe zu übertragen. Im Zugbetrieb kann die Ausgangsscheibe an der rückwärtigen in tangentialer Richtung weisenden Seite der herausgebogenen Rampe anschlagen und ein Drehmoment übertragen.

Die gattungsgemäße Veröffentlichungen DE 10 2011 086 185 A1 und die WO 2011/127898 A1 zeigen Riemenscheibendämpfer mit Freilaufeinrichtungen. Die Freilaufeinrichtungen weisen Rampenringe mit einer Federeinrichtung auf.

Es besteht ein ständiges Bedürfnis Entkoppler derart weiter zu bilden, dass bei einer möglichst geringen Geräuschemission unerwünschte Drehmomentübertragungen vermieden werden.

Es ist die Aufgabe der Erfindung einen Entkoppler zu schaffen, mit dessen Hilfe unerwünschte Drehmomentübertragungen bei geringer Geräuschemission vermieden werden.

Die Lösung der Aufgabe erfolgt erfindungsgemäß durch einen Entkoppler mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Entkoppler mit den Merkmalen des Anspruches 1 vorgesehen. Dabei weist die Federeinrichtung mindestens ein erstes Federelement und mindestens ein zweites Federelement auf, wobei der erste Rampenring und der zweite Rampenring in axialer Richtung zwischen dem ersten Federelement und dem zweiten Federelement angeordnet sind. Dies ermöglicht es im Schubbetrieb sowohl den ersten Rampenring als auch den zweiten Rampenring axial ausweichen zu lassen, so dass nicht ein einzelner Rampenring über die gesamte axiale Wegstrecke verschoben werden muss. Ein übermäßiger Verschleiß eines einzelnen Rampenrings wird dadurch vermieden, so dass die Lebensdauer des Entkopplers erhöht ist. Die Federelemente können insbesondere in Reihenschaltung wirken, so dass sich eine weiche Federkennlinie für die Federeinrichtung ergibt und ein höherer Ausrückweg zugelassen werden kann. Die Federelemente können auch in Parallelschaltung wirken, so dass sich eine steifere Federkennlinie für die Federeinrichtung ergibt und eine höherer Federkraft zugelassen werden kann. Ferner ist es möglich bei mehr als zwei Federelemente sowohl eine Reihenschaltung als auch eine Parallelschaltung der Federelemente vorzusehen, um eine gewünschte Federkennlinie für die Federeinrichtung einzustellen. Insbesondere wenn für mindestens ein Federelement eine Tellerfeder verwendet wird, kann bei einem geringen Bauraumbedarf eine geeignete Verschaltung der Federelemente vorgesehen werden.

Durch die Federeinrichtung kann sichergestellt werden, dass der erste Rampenring mit dem zweiten Rampenring kämmen kann, um ein Drehmoment zu übertragen. Gleichzeitig ist es möglich, dass sich der erste Rampenring in axialer Richtung relativ zu dem zweiten Rampenring von dem zweiten Rampenring gegen die Federkraft der Federeinrichtung wegbewegen kann, wenn im Schubbetrieb der zweite Rampenring den ersten Rampenring überholt. In diesem Fall kann der erste Rampenring an der zweiten Schubrampe und oder der zweite Rampenring an der ersten Schubrampe abgleiten, so dass sich eine Relativdrehung des ersten Rampenrings zu dem zweiten Rampenring ohne wesentliche Drehmomentübertragung in der Art eines Freilaufs ergibt. Dadurch kann vermieden werden, dass eine mit dem zweiten Rampenring gekoppelte Riemenscheibe im Schubbetrieb abgebremst wird und die Funktionalität der über die Riemenscheibe angetriebenen Nebenaggregate beeinträchtigt wird. Stattdessen kann im Schubbetrieb die Riemenscheibe und der zweite Rampenring von der Antriebswelle und dem ersten Rampenring entkoppelt werden, so dass eine unerwünschte Drehmoment-übertragung in Schubrichtung vermieden ist.

Durch die die Schubrampe und die Zugrampe des einen Rampenrings kann ein zum jeweils anderen Rampenring weisender Zahn ausgebildet werden, der beispielsweise von einem scheibenförmigen Grundkörper des Rampenrings in axialer Richtung abstehen kann, wobei insbesondere in Umfangsrichtung mehrere Zähne auf einem gemeinsamen Radius hintereinander angeordnet sind. Über die Anzahl der Zähne und die Erstreckung des jeweiligen Zahns in Umfangsrichtung kann die Auflösung ("Feinheit") des jeweiligen Rampenrings eingestellt werden. Ferner kann über die Erstreckung des Zahns in axialer Richtung ("Zahnhöhe") die Wegstrecke eingestellt werden, um den der erste Rampenring von dem zweiten Rampenring abheben muss, damit sich der erste Rampenring um eine Zahnteilung zum zweiten Rampenring im Schubbetrieb relativ verdrehen kann. Im Gegensatz zu einer Ratsche oder Knarre ist der in radialer Richtung betrachtete Zahnquerschnitt jedoch nicht als rechtwinkeliges Trapez oder rechtwinkeliges Dreieck ausgebildet, sondern als windschiefes Rechteck beziehungsweise windschiefes Dreieck. Durch die Zugrampe kann eine Hinterschneidung ausgebildet sein. Der Zahnquerschnitt kann beispielsweise einem Parallelogramm ähneln, bei dem die Schenkel nicht parallel sind und die der Basis gegenüberliegende Kante insbesondere eine Länge von ungefähr Null aufweisen kann. Der Zahnquerschnitt kann insbesondere als konkaves Trapez ausgestaltet sein, wobei die der Basis gegenüberliegende Kante eine Länge von ungefähr Null aufweisen kann. Der Zahnquerschnitt kann dadurch beispielsweise der Geometrie eines Sägezahns mit einem Schnittwinkel von kleiner 90° entsprechen, wobei die Schubrampe dem Zahnrücken und die Zugrampe der Zahnbrust entspricht. Die Zugrampe verläuft nicht parallel zu einer Drehachse des Entkopplers sondern ist gegenüber der Drehachse in Umfangsrichtung angeschrägt. In Zugrichtung kann dadurch der Zahn des einen Rampenrings in eine korrespondierende Öffnung und/oder einen korrespondierenden Zahn des anderen Rampenrings eingreifen, so dass durch die Zugrampe bezogen auf die Umfangsrichtung eine schiefe Ebene ausgebildet wird, durch welche die Rampenringe infolge des Kraftanteils in axialer Richtung an der Zugrampe aufeinander zu gezogen werden. Der erste Rampenring kann mit dem zweiten Rampenring verhakt werden. Ein axiales Spiel des ersten Rampenrings zum zweiten Rampenring kann dadurch eliminiert werden, so dass Klappergeräusche vermieden sind. Dadurch können unerwünschte Drehmomentübertragungen bei geringer Geräuschemission vermieden werden.

Der Zugbetrieb ist ein Betriebszustand, in dem der erste Rampenring den zweiten Rampenring überholt und bei einer drehfesten Verbindung des ersten Rampenrings mit dem zweiten Rampenring ein Drehmomentfluss von dem ersten Rampenring zum zweiten Rampenring stattfindet. Wenn der Entkoppler in einer Riemenscheibeneinheit verbaut ist, treibt in diesem Betriebszustand die Antriebswelle die Riemenscheibe und die über das Zugmittel mit der Riemenscheibe angekoppelten Nebenaggregate an. Durch die Zugrampe kann eine mechanische Koppelung des ersten Rampenrings mit dem zweiten Rampenring herbeigeführt werden, so dass der erste Rampenring und der zweite Rampenring mit der selben Drehzahl drehen und ein Drehmomentfluss von dem ersten Rampenring zum zweiten Rampenring erfolgen kann. Der Schubbetrieb ist ein Betriebszustand, in dem der zweite Rampenring den ersten Rampenring überholt und bei einer drehfesten Verbindung des ersten Rampenrings mit dem zweiten Rampenring ein Drehmomentfluss von dem zweiten Rampenring zum ersten Rampenring stattfinden würde. Wenn der Entkoppler in einer Riemenscheibeneinheit verbaut ist, würde in diesem Fall die Riemenscheibe und die über das Zugmittel mit der Riemenscheibe gekoppelten Nebenaggregate die Antriebswelle antreiben und/oder die Nebenaggregate würden von der Antriebswelle nicht angetrieben sondern abgebremst. Durch die Schubrampe kann jedoch im Schubbetrieb, wenn der zweite Rampenring den ersten Rampenring überholt, eine mechanische Koppelung in der Art eines Freilaufs aufgehoben werden, so dass ein unabsichtliches Abbremsen der Nebenaggregate vermieden wird. Die Riemenscheibeneinheit kann eine Riemenscheibe aufweisen, mit deren Hilfe Nebenaggregate über ein Zugmittel angetrieben werden können. Die Riemenscheibeneinheit ist insbesondere als Riemenscheibendämpfer ausgestaltet, bei dem ein zusätzlicher Drehschwingungsdämpfer, beispielsweise ein Gummitilger oder eine relativ drehbare Koppelung der Riemenscheibe über eine Bogenfeder, vorgesehen sein kann. Der zweite Rampenring kann direkt mit der Riemenscheibe drehfest verbunden sein, wobei der zweite Rampenring jedoch vorzugsweise mittelbar über einen Drehschwingungsdämpfer mit der Riemenscheibe verbunden werden kann.

Insbesondere ist mit Hilfe der ersten Zugrampe ein zu dem zweiten Rampenring weisender erster Keil zum Einfädeln in den zweiten Rampenring und/oder mit Hilfe der zweiten Zugrampe ein zu dem ersten Rampenring weisender zweiter Keil zum Einfädeln in den ersten Rampenring ausgebildet. Durch den Keil kann an seiner Spitze eine Zahnspitze des Zahns ausgebildet werden, die bei einem Drehmomenteintrag in Zugrichtung in eine Öffnung und/oder einen korrespondierend ausgebildeten Zahn des jeweils anderen Rampenrings eingetrieben werden, um die Rampenringe aufeinander zu zu ziehen. Die Spitze des Keils kann insbesondere gerundet ausgeführt sein, wodurch Belastungsspitzen in der Spitze des Keils verringert werden können ohne die Einfädelfunktion maßgeblich zu beeinflussen. Durch die Federeinrichtung kann eine hinreichend große Federkraft aufgebracht werden, dass bei einer Relativdrehung des ersten Rampenrings zum zweiten Rampenring der Keil sicher eingefädelt werden kann. Insbesondere sind die Geometrie der Spitze des Keils und die Federkraft der Federeinrichtung derart abgestimmt, dass bei einem maximal möglichen zu erwartenden Drehmomentsprung in Zugrichtung ein sicheres Einfädeln gewährleistet ist.

Vorzugsweise ist durch die erste Zugrampe eine erste Aufnahmetasche, insbesondere zur Aufnahme eines durch die zweite Zugrampe begrenzten zweiten Keils des zweiten Rampenrings, und/oder durch die zweite Zugrampe eine zweite Aufnahmetasche, insbesondere zur Aufnahme eines durch die erste Zugrampe begrenzten ersten Keils des ersten Rampenrings, ausgebildet. Die Aufnahmetasche ist insbesondere derart ausgeformt, dass der entsprechende Keil an einer definierten Fläche anschlagen kann. Beispielsweise kann bei einem Drehmomenteintrag in Zugrichtung der Keil an einem Zahngrund der Aufnahmetasche anschlagen, wodurch sich ein im Wesentlichen klapperfreier Zusammenhalt ergibt. Insbesondere kann der Keil flächig an dem Zahngrund anschlagen, so dass sich die beim Anschlagen auftretenden Kräfte auf einer größeren Fläche verteilen können. Hierzu können der Keil und der Zahngrund insbesondere im Wesentlichen parallele Axialflächen aufweisen, die in Umfangsrichtung durch den jeweiligen Zahn unterbrochen sein können. Die Axialflächen sind insbesondere in einer Radialebene des Entkopplers vorgesehen.

Besonders bevorzugt gilt für den Betrag des mittleren Schubwinkels α 3° ≤ |α| ≤ 45°, insbesondere 10° ≤ |α| ≤ 40°, vorzugsweise 20° ≤ |α| ≤ 35° und besonders bevorzugt 25° ≤ |α| ≤ 30° und/oder für den Betrag des mittleren Zugwinkels β 0° < |β| ≤ 25°, insbesondere 1° ≤ |β| ≤ 10°, vorzugsweise 2° ≤ |β| ≤ 7° und besonders bevorzugt 3° ≤ |β| ≤ 5°. Durch den mittleren Schubwinkel ergibt sich für die Schubrampe eine schiefe Ebene, die unter Berücksichtigung der zu erwartenden Reibungsbeiwerte der Kontaktflächen im Bereich der Schubrampe ein einfaches Abgleiten an der Schubrampe ermöglicht. Der mittlere Zugwinkel ermöglicht einerseits unter Berücksichtigung der zu erwartenden Reibungsbeiwerte der Kontaktflächen im Bereich der Zugrampe ein Abgleiten und ermöglicht andererseits eine gute Herstellbarkeit. Der jeweilige Rampenring kann dadurch noch vergleichsweise einfach aus einem Werkzeug entformt werden. Darüber hinaus gewährleistet die Zugrampe ein sicheres Einfädeln und eine gute Momentenübertragung. Die Schubrampe und/oder die Zugrampe sind insbesondere im Wesentlichen radial aufgerichtet. Der mittlere Schubwinkel und/oder der mittlere Zugwinkel wird daher mittig in der im Wesentlichen radialen Erstreckung der Schubrampe und/oder die Zugrampe gemessen. Der mittlere Schubwinkel α entspricht einem spitzen Winkel, der eingeschlossen ist zwischen der Oberfläche der Schubrampe und einer gedachten Axiallinie, die parallel zur Drehachse durch eine am weitesten abstehende Kante der Schubrampe im Bereich der Zahnspitze verläuft. Der mittlere Zugwinkel β entspricht einem spitzen Winkel, der eingeschlossen ist zwischen der Oberfläche der Zugrampe und einer gedachten Axiallinie, die parallel zur Drehachse durch eine am weitesten abstehende Kante der Zugrampe im Bereich der Zahnspitze verläuft. Im Vergleich zu einem Zugwinkel β, der sich bei einer trapezförmigen Ausgestaltung des Zahns ergeben würde, ist der Zugwinkel negativ, so dass sich eine negative Verzahnung ergeben kann.

Insbesondere ist der erster Rampenring und/oder der zweite Rampenring aus einem insbesondere faserverstärkten Kunststoffmaterial hergestellt. Durch die höhere Elastizität des Kunststoffmaterials im Vergleich zu Metall kann ein geräuscharmes Ansprechverhalten des Entkopplers erreicht werden. Ferner sind geringere Fertigungstoleranzen möglich. Durch härtere Inlays und/oder Fasern kann eine ausreichende Festigkeit erreicht werden. Der erste Rampenring und/oder der zweite Rampenring können insbesondere durch Kunststoffspritzguss hergestellt werden. Hierzu kann insbesondere eine zweiteilige Form verwendet werden, wobei zum Entformen eine erste Formhälfte, welche die von dem jeweils anderen Rampenring weg weisende Rückseite und radial innere und/oder radial äußere Vorsprunge ausbildet in axialer Richtung entfernt werden kann. Eine zweite Formhälfte, welche im Wesentlichen die Zähne des jeweiligen Rampenrings ausbildet, kann um einen geringen Winkelbetrag entlang der Schubrampe verdreht werden bis die zweite Formhälfte in axialer Richtung an der Zugrampe vorbei entfernt werden kann.

Vorzugsweise weist der erster Rampenring und/oder der zweite Rampenring insbesondere im Bereich der Schubrampe und/oder im Bereich der Zugrampe ein reibungsreduzierendes Material, insbesondere PTFE, auf. Vorzugsweise ist das reibungsreduzierende Material als Beschichtung vorgesehen, welche ganz oder teilweise auf einer Oberfläche der Schubrampe und/oder der Zugrampe aufgebracht ist. Es ist auch möglich die Beschichtung durch ein Eintauchen des jeweiligen Rampenrings in das flüssige Material der Beschichtung auszubilden. Vorzugsweise kann als reibungsreduzierendes Material Polytetrafluorethylen (PTFE) verwendet werden, wodurch sich ein besonders geringer Reibungsbeiwert ergibt.

Die Efindung betrifft ferner einen Riemenscheibendämpfer zur Drehschwingungsdämpfung eines von einer Antriebswelle eines Kraftfahrzeugs bereitgestellten Drehmoments, mit einer Nabe zur Verbindung mit der Antriebswelle, einer Riemenscheibe zum Antrieb von Nebenaggregaten mit Hilfe eines Zugmittels, einem relativ zur Riemenscheibe verdrehbaren Eingangsflansch zum Einleiten eines Drehmoments in die Riemenscheibe, einem zwischen dem Eingangsflansch und der Riemenscheibe zwischengeschaltetes Energiespeicherelement, insbesondere Bogenfeder, zur Übertragung eines Drehmoments von dem Eingangsflansch an die Riemenscheibe und einem mit der Nabe und dem Eingangsflansch gekoppelten Entkoppler, der wie vorstehend beschrieben aus- und weitergebildet sein kann. Eine unerwünschte Drehmomentübertragung in Schubrichtung kann durch den Entkoppler vermieden werden, während gleichzeitig ein axiales Spiel des ersten Rampenrings zum zweiten Rampenring im Zugbetrieb eliminiert werden kann, so dass Klappergeräusche vermieden sind. Dadurch können bei dem Riemenscheibendämpfer unerwünschte Drehmomentübertragungen bei geringer Geräuschemission vermieden werden.

Das Nebenaggregat ist beispielsweise eine Kühlwasserpumpe, Ölpumpe, Klimakompressor einer Klimaanlage, Kraftstoffpumpe, Lichtmaschine, Schmierstoffpumpe, mechanischer Lader/Kompressor für Ladeluftverdichtung bei aufladbaren Kraftfahrzeugmotoren. Das Zugmittel kann als Seil, Riemen, insbesondere Flachriemen oder Keilriemen, insbesondere Poly-V-Riemen, Kette oder Ähnliches ausgestaltet sein. Das Zugmittel ist insbesondere faserverstärkt und/oder weist mindestens einen Metalldraht auf, so dass eine besonders hohe Zugfestigkeit gegeben ist.

Insbesondere ist die Riemenscheibe über ein Radiallager relativ verdrehbar an der Nabe gelagert, wobei das Radiallager als Wälzlager ausgestaltet ist. Da das Radiallager nicht als Gleitlager sondern als Wälzlager ausgestaltet ist, können ohne besondere Schmierstoffanforderungen hohe Radialkräfte abgetragen werden. Axialkräfte zwischen der Riemenscheibe und der Nabe können über ein Axialgleitlager abgetragen werden.

Vorzugsweise bildet die Riemenscheibe einen das Energiespeicherelement aufnehmenden abgedichteten Aufnahmeraum aus, wobei der Aufnahmeraum ein Schmiermittel, insbesondere Schmierfett, enthält und der Entkoppler vollständig innerhalb des Aufnahmeraums angeordnet ist. Dies ermöglicht es, dass der Entkoppler von dem für das Energiespeicherelement vorgesehene Schmiermittel ebenfalls geschmiert werden kann, so dass die Reibung zwischen dem ersten Rampenring und dem zweiten Rampenring weiter reduziert werden kann.

Die Erfindung betrifft ferner einen Riementrieb mit einer Antriebswelle, insbesondere Kurbelwelle, eines Kraftfahrzeugmotors, einem mit der Antriebswelle verbundenen Riemenscheibendämpfer, der wie vorstehend beschrieben aus- und weitergebildet sein kann, einem von der Riemenscheibe des Riemenscheibendämpfers antreibbaren Zugmittel und mindestens einem von dem Zugmittel antreibbaren Nebenaggregat für das Kraftfahrzeug. Eine unerwünschte Drehmomentübertragung in Schubrichtung kann durch den Riemenscheibendämpfer vermieden werden, während gleichzeitig ein axiales Spiel des ersten Rampenrings zum zweiten Rampenring im Zugbetrieb eliminiert werden kann, so dass Klappergeräusche vermieden sind. Dadurch können bei dem Riemenscheibendämpfer unerwünschte Drehmomentübertragungen bei geringer Geräuschemission vermieden werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines Riemenscheibendämpfers,
- Fig. 2:: eine schematische perspektivische Ansicht einer Nabe für den Riemenscheibendämpfer aus Fig. 1,
- Fig. 3:: eine schematische perspektivische Ansicht eines ersten Rampenrings eines Entkopplers für den Riemenscheibendämpfer aus Fig. 1,
- Fig. 4:: eine schematische Prinzipdarstellung einer Abwicklung eines Teils des ersten Rampenrings auf Fig. 3 entlang einer mittigen Schnittlinie eines Zahns in Umfangsrichtung,
- Fig. 5:: eine schematische perspektivische Ansicht eines zweiten Rampenrings eines Entkopplers für den Riemenscheibendämpfer aus Fig. 1 und
- Fig. 6:: eine schematische perspektivische Ansicht eines Eingangsflansches für den Riemenscheibendämpfer aus Fig. 1.

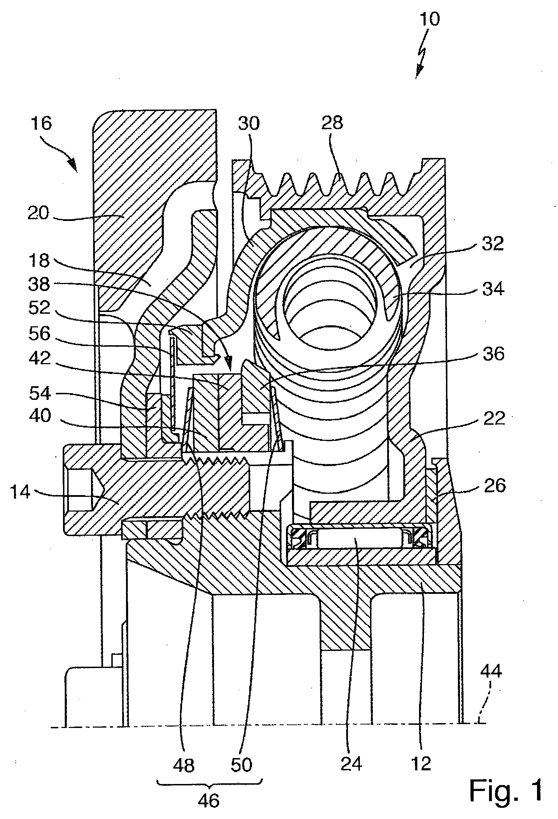

Der in Fig. 1 dargestellte Riemenscheibendämpfer 10 weist eine Nabe 12 auf, die mit einer Eingangswelle, insbesondere Kurbelwelle, eines Kraftfahrzeugmotors verbunden werden kann. Mit der Nabe 12 ist über eine Befestigungsschraube 14 ein Drehschwingungsdämpfer 16 in Form eines Gummitilgers verbunden, wobei der Drehschwingungsdämpfer 16 eine über ein Elastikelement 18, insbesondere ein gummielastisches Material, angebundene Schwungmasse 20 aufweist. An der Nabe 12 ist eine Riemenscheibe 22 gelagert. Die Riemenscheibe 22 ist über ein als Wälzlager ausgestaltetes Radiallager 24 und ein als Gleitlager ausgestaltetes Axiallager 26 an der Nabe 12 abgestützt. Die Riemenscheibe 22 weist radial außen eine Profilierung 28 auf, um insbesondere ein als Poly-V-Riemen ausgestaltetes Zugmittel anzutreiben, wodurch Nebenaggregate eines Kraftfahrzeugs angetrieben werden können. Mit der Riemenscheibe 22 ist ein Deckel 30 verbunden, wodurch ein Aufnahmeraum 32 begrenzt wird, in dem ein Energiespeicherelement in Form einer Bogenfeder 34 aufgenommen ist. Die Bogenfeder 34 ist an einem Ende an dem Deckel 30 und/oder der Riemenscheibe 22 und an einem gegenüberliegenden Ende an einem Eingangsflansch 36 abgestützt, so dass durch eine Relativdrehung des Eingangsflansches 36 zur Riemenscheibe 22 Drehungleichförmigkeiten, die insbesondere durch eine motorische Verbrennung des Kraftfahrzeugmotors und/oder die auftretenden Massenkräfte bei der Anbindung einer Kurbelwelle entstehen, zumindest gedämpft werden.

Im Drehmomentfluss von der Nabe 12 zur Riemenscheibe 22 ist zwischen der Nabe 12 und dem Eingangsflansch 36 ein Entkoppler 38 vorgesehen. Der Entkoppler 38 weist einen insbesondere drehfest mit der Nabe 12 verbundenen ersten Rampenring 40 und einen mit dem ersten Rampenring kämmenden zweiten Rampenring 42 auf, der insbesondere drehfest mit dem Eingangsflansch 36 verbunden ist. Der erste Rampenring 40 und der zweite Rampenring 42 sind in einer Axialrichtung parallel zu einer Drehachse 44 verschiebbar. Mit Hilfe einer Federeinrichtung 46 werden der erste Rampenring 40 und der zweite Rampenring 42 zusammengedrückt. Im dargestellten Ausführungsbeispiel weist die Federeinrichtung 46 ein als Tellerfeder ausgestaltetes erstes Federelement 48 und ein als Tellerfeder ausgestaltetes zweites Federelement 50 auf. Das erste Federelement 48 ist mittelbar an der Nabe 10 abgestützt und drückt gegen den ersten Rampenring 40. Das zweite Federelement 50 ist an der Nabe 10 abgestützt und drückt mittelbar über den Eingangsflansch 36 gegen den zweiten Rampenring 42. Zur Abdichtung des Aufnahmeraums 32 ist mit dem Deckel 30 ein äußerer Dichtring 52 verbunden, während mit der Nabe 12 ein innerer Dichtring 54 verbunden ist. Zwischen dem äußeren Dichtring 52 und dem inneren Dichtring 54 ist eine Dichtscheibe 56 federnd eingespannt, so dass mit Hilfe der Dichtscheibe 56 eine Relativdrehung des äußeren Dichtrings 52 zum inneren Dichtring 54 ermöglicht ist. Der innere Dichtring 52 ist derart angeordnet, dass der Entkoppler 38 zwischen der Dichtscheibe 56 und der Riemenscheibe 22 positioniert ist, so dass der Entkoppler 38 innerhalb des dadurch begrenzten Aufnahmeraums 32 angeordnet ist.

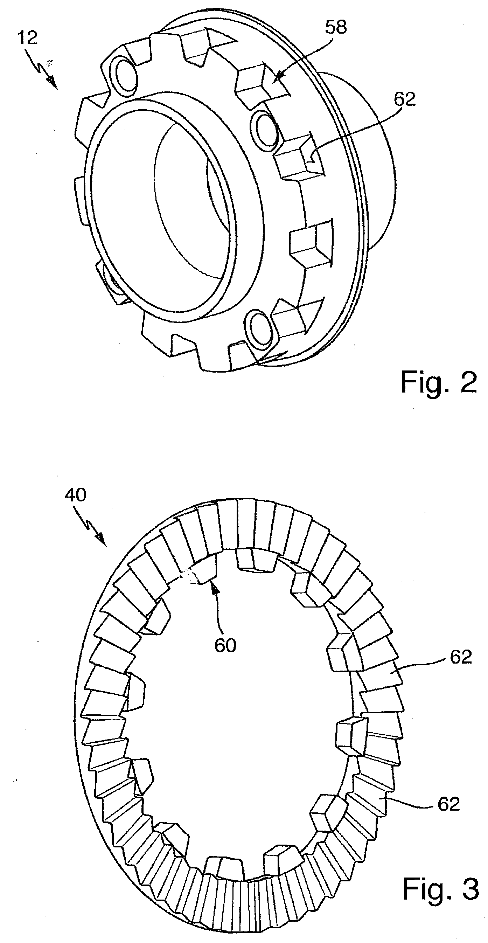

Wie in Fig. 2 dargestellt weist die Nabe 12 eine Nabenverzahnung 58 auf, in welche eine, wie in Fig. 3 dargestellt, Innenverzahnung 60 des ersten Rampenrings 40 eingesetzt werden kann. Hierzu kann der erste Rampenring 40 seitlich axial auf die Nabe 12 aufgesteckt werden, bis die Innenverzahnung 60 innerhalb der Nabenverzahnung 58 an einem ersten Axialanschlag 62 anschlägt.

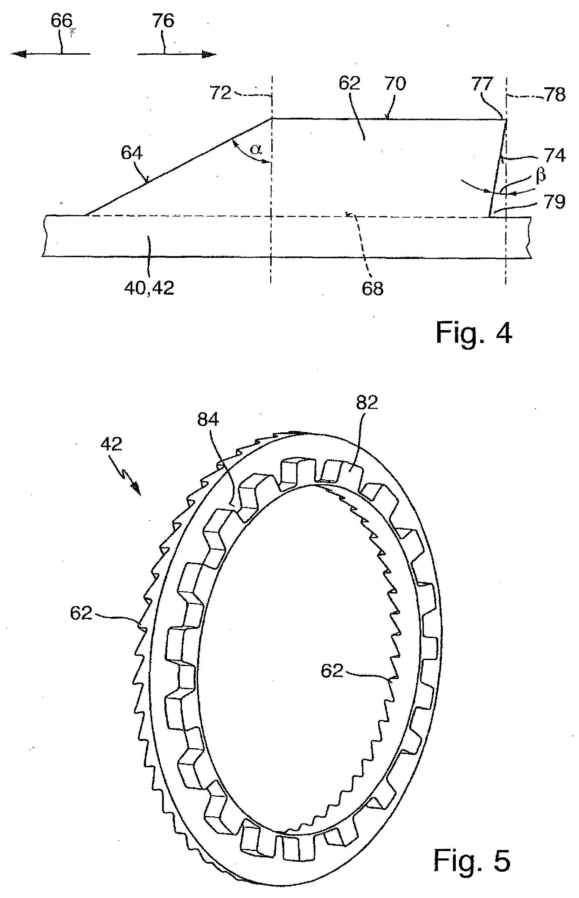

Der erste Rampenring 40 und/oder der zweite Rampenring 42 weisen mehrere in Umfangsrichtung auf einem gemeinsamen Radius hintereinander angeordnete Zähne 62 auf, die auf den jeweils anderen Rampenring 42, 40 zu abstehen, wobei ein Zahn 62 in Fig. 4 stark schematisch exemplarisch dargestellt ist. Der in der dargestellten Ausführungsform dargestellte Zahn 62 des ersten Rampenrings 40 und/oder des zweiten Rampenrings 42 weist eine Schubrampe 64, die bei einer Relativbewegung des Zahns 62 entlang einer Schubrichtung 66 an dem jeweils anderem Rampenring 42, 40 abgleiten kann. Im dargestellten Ausführungsbeispiel ist der Zahn 62 trapezartig ausgeführt, wobei eine einer Basis 68 gegenüberliegende Grundseite 70 vorgesehen ist, die zum jeweils anderen Rampenring 42, 40 weist. An einem von dem zugeordneten Rampenring 40, 42 am stärksten abstehenden Punkt der Schubrampe 64 kann die Schubrampe 64 in die Grundseite 70 übergehen. Zwischen einer zur Drehachse 44 parallelen erste Axiallinie 72, die durch diesen Punkt verläuft, und der Schubrampe 64 wird ein mittlerer Schubwinkel α eingeschlossen. Gegenüberliegend zu der Schubrampe 64 ist eine zwischen der Basis 68 und der Grundseite 70 verlaufende Zugrampe 74 vorgesehen, die bei einer Relativbewegung des Zahns 62 entlang einer Zugrichtung 76 den jeweils anderem Rampenring 42, 40 an den eignen Rampenring 40, 42 heranziehen kann. Zwischen einer zur Drehachse 44 parallelen zweiten Axiallinie 78, die durch einen Punkt verläuft, an dem die Zugrampe 74 mit der Grundseite 70 verbunden ist, und der Zugrampe 74 wird ein mittlerer Zugwinkel β eingeschlossen. Es ist auch möglich den Zahn 62 in Umfangsrichtung so stark zu verkürzen, dass die Grundseite 70 entfällt und die erste Axiallinie 72 mit der zweiten Axiallinie 78 zusammenfällt. In diesem Fall schließt sich die Zugrampe 74 im Wesentlichen direkt an der Schubrampe 64 an, so dass sich für den Zahn 62 ein im Wesentlichen sägezahnförmiger Querschnitt ergibt. Der Zahn 62 bildet in dem Übergangsbereich der Zugrampe 74 zur Grundseite 70 oder zur Schubrampe 64 einen Keil 77 aus, wobei gleichzeitig zwischen der Zugrampe 74 und der Basis 68 eine Aufnahmetasche 79 insbesondere zur Aufnahme eines Teils eines korrespondierend ausgestalteten Zahns 62 des jeweils anderen Rampenrings 42, 40 ausgebildet ist.

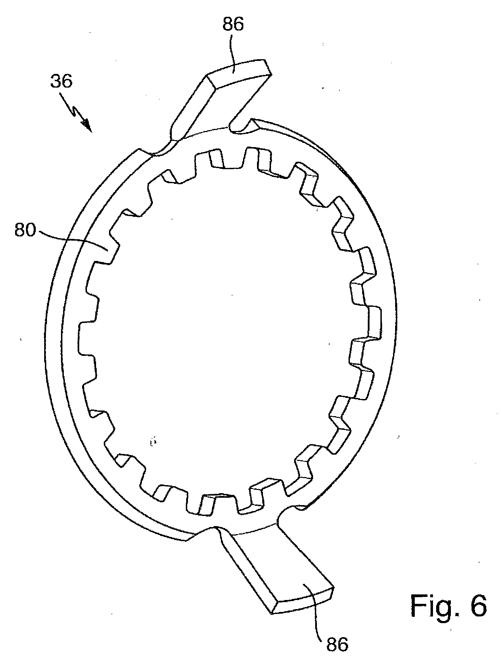

Wie in Fig. 5 und Fig. 6 dargestellt weist der Eingangsflansch 36 eine Flanschverzahnung 80 auf, in welche eine Außenverzahnung 82 des zweiten Rampenrings 42 eingesetzt werden kann. Hierzu kann der Eingangsflansch 36 seitlich axial auf den zweiten Rampenring 42 aufgesteckt werden, bis die Flanschverzahnung 80 innerhalb der Außenverzahnung 82 an einem zweiten Axialanschlag 84 anschlägt. Der Eingangsflansch 80 weist ferner nach radial außen abstehende Ansätze 86 auf, die an der jeweiligen Bogenfeder 34 anschlagen können.

### Bezugszeichenliste

- 10: Riemenscheibendämpfer
- 12: Nabe
- 14: Befestigungsschraube
- 16: Drehschwingungsdämpfer
- 18: Elastikelement
- 20: Schwungmasse
- 22: Riemenscheibe
- 24: Radiallager
- 26: Axiallager
- 28: Profilierung
- 30: Deckel
- 32: Aufnahmeraum
- 34: Bogenfeder
- 36: Eingangsflansch
- 38: Entkoppler
- 40: erster Rampenring
- 42: zweiter Rampenring
- 44: Drehachse
- 46: Federeinrichtung
- 48: erstes Federelement
- 50: zweites Federelement
- 52: äußerer Dichtring
- 54: innerer Dichtring
- 56: Dichtscheibe
- 58: Nabenverzahnung
- 60: Innenverzahnung
- 62: Zahn
- 64: Schubrampe
- 66: Schubrichtung
- 68: Basis
- 70: Grundseite
- 72: erste Axiallinie
- 74: Zugrampe
- 76: Zugrichtung
- 77: Keil
- 78: zweiten Axiallinie
- 79: Aufnahmetasche
- 80: Flanschverzahnung
- 82: Außenverzahnung
- 84: zweiter Axialanschlag
- 86: Ansatz

## Patentansprüche

1. Entkoppler zur Dämpfung einer Drehmomentübertragung zwischen einer Antriebswelle eines Kraftfahrzeugs und einer Riemenscheibe (22) zum Antrieb von Nebenaggregaten mit Hilfe eines Zugmittels, mit
einem ersten Rampenring (40) zur Einleitung eines von der Antriebswelle bereitgestellten Drehmoments,
einem mit dem ersten Rampenring (40) kämmenden zweiten Rampenring (42) zur Ausleitung eines Drehmoments an einen Eingangsflansch (36) einer Riemenscheibeneinheit (10), und
mindestens einer Federeinrichtung (46) zum axialen Zusammendrücken des ersten Rampenrings (40) und des zweiten Rampenrings (42),
wobei der erste Rampenring (40) eine zu dem zweiten Rampenring (42) weisende erste Schubrampe (64) und/oder der zweite Rampenring (42) eine zu dem ersten Rampenring (40) weisende zweite Schubrampe (64) aufweist und die erste Schubrampe (64) und/oder die zweite Schubrampe (64) in Umfangsrichtung gegenüber der Axialrichtung (72) um einen mittleren Schubwinkel α derart angeschrägt ist, dass im Schubbetrieb der erste Rampenring (40) relativ zum zweiten Rampenring (42) gegen die Federkraft der Federeinrichtung (46) verdreht wird, und
wobei der erste Rampenring (40) eine von dem zweiten Rampenring (42) wegweisende erste Zugrampe (74) und/oder der zweite Rampenring (42) eine von dem ersten Rampenring (40) wegweisende zweite Zugrampe (74) aufweist und die erste Zugrampe (74) und/oder die zweite Zugrampe (74) in Umfangsrichtung gegenüber der Axialrichtung (78) um einen mittleren Zugwinkel β derart angeschrägt ist, dass im Zugbetrieb der erste Rampenring (40) und der zweite Rampenring (42) aufeinander zu gezogen werden, **dadurch gekennzeichnet, dass** die Federeinrichtung (46) mindestens ein erstes Federelement (48) und mindestens ein zweites Federelement (50) aufweist, wobei der erste Rampenring (42) und der zweite Rampenring (42) in axialer Richtung zwischen dem ersten Federelement (48) und dem zweiten Federelement (50) angeordnet sind.

2. Entkoppler nach Anspruch 1, **dadurch gekennzeichnet, dass** mit Hilfe der ersten Zugrampe (74) ein zu dem zweiten Rampenring (42) weisender erster Keil (77) zum Einfädeln in den zweiten Rampenring (42) und/oder mit Hilfe der zweiten Zugrampe (74) ein zu dem ersten Rampenring (42) weisender zweiter Keil (77) zum Einfädeln in den ersten Rampenring (40) ausgebildet ist.

3. Entkoppler nach Anspruch 1 oder 2, **dadurch gekennzeichnet, dass** durch die erste Zugrampe (74) eine erste Aufnahmetasche (79) zur Aufnahme eines durch die zweite Zugrampe (74) begrenzten zweiten Keils (77) des zweiten Rampenrings (42), und/oder durch die zweite Zugrampe (74) eine zweite Aufnahmetasche (79) zur Aufnahme eines durch die erste Zugrampe (74) begrenzten ersten Keils (77) des ersten Rampenrings (40), ausgebildet ist.

4. Entkoppler nach einem der Ansprüche 1 bis 3, **dadurch gekennzeichnet, dass** für den Betrag des mittleren Schubwinkels α 3° ≤ |α| ≤ 45° gilt.

5. Entkoppler nach einem der Ansprüche 1 bis 4, **dadurch gekennzeichnet, dass** für den Betrag des mittleren Schubwinkels α 25° ≤ |α| ≤ 30° und/oder für den Betrag des mittleren Zugwinkels β 3° ≤ |β| ≤ 5° gilt.

6. Entkoppler nach einem der Ansprüche 1 bis 5, **dadurch gekennzeichnet, dass** der erster Rampenring (40) und/oder der zweite Rampenring (42) aus einem Kunststoffmaterial hergestellt ist.

7. Entkoppler nach Anspruch 6, **dadurch gekennzeichnet, dass** das Kunststoffmaterial faserverstärkt ist.

8. Entkoppler nach einem der Ansprüche 1 bis 7, **dadurch gekennzeichnet, dass** der erster Rampenring (40) und/oder der zweite Rampenring (42) im Bereich der Schubrampe (64) und/oder im Bereich der Zugrampe (74) ein reibungsreduzierendes Material aufweist.

9. Entkoppler nach Anspruch 8, **dadurch gekennzeichnet, dass** das reibungsreduzierende Material PTFE aufweist.

10. Riemenscheibendämpfer zur Drehschwingungsdämpfung eines von einer Antriebswelle eines Kraftfahrzeugs bereitgestellten Drehmoments, mit einer Nabe (12) zur Verbindung mit der Antriebswelle, einer Riemenscheibe (22) zum Antrieb von Nebenaggregaten mit Hilfe eines Zugmittels, einem relativ zur Riemenscheibe (22) verdrehbaren Eingangsflansch (36) zum Einleiten eines Drehmoments in die Riemenscheibe (22), einem zwischen dem Eingangsflansch (36) und der Riemenscheibe (22) zwischengeschaltetes Energiespeicherelement zur Übertragung eines Drehmoments von dem Eingangsflansch (36) an die Riemenscheibe (22) und einem mit der Nabe (12) und dem Eingangsflansch (36) gekoppelten Entkoppler (38) nach einem der Ansprüche 1 bis 9.

11. Riemenscheibendämpfer nach Anspruch 10, **dadurch gekennzeichnet, dass** das Energiespeicherelement eine Bogenfeder (34) ist.

12. Riemenscheibendämpfer nach Anspruch 10 oder 11, **dadurch gekennzeichnet, dass** die Riemenscheibe (22) über ein Radiallager (24) relativ verdrehbar an der Nabe (12) gelagert ist, wobei das Radiallager (24) als Wälzlager ausgestaltet ist.

13. Riemenscheibendämpfer nach einem der Ansprüche 10 bis 12, **dadurch gekennzeichnet, dass** die Riemenscheibe (22) einen das Energiespeicherelement (34) aufnehmenden abgedichteten Aufnahmeraum (32) ausbildet, wobei der Aufnahmeraum (32) ein Schmiermittel enthält und der Entkoppler (38) vollständig innerhalb des Aufnahmeraums (32) angeordnet ist.

14. Riemenscheibendämpfer nach Anspruch 13, **dadurch gekennzeichnet, dass** das Schmiermittel ein Schmierfett ist.

## Claims

1. Decoupler for the damping of a transmission of torque between a driveshaft of a motor vehicle and
a belt pulley (22) for driving auxiliary assemblies via a traction mechanism, having
a first ramp ring (40) for the introduction of a torque provided by the drive shaft,
a second ramp ring (42) which meshes with the first ramp ring (40) and which serves for outputting a torque to an input flange (36) of a belt pulley unit (10), and
at least one spring device (46) for pushing the first ramp ring (40) and the second ramp ring (42) together axially,
wherein the first ramp ring (40) has a first overrun ramp (64) pointing toward the second ramp ring (42) and/or the second ramp ring (42) has a second overrun ramp (64) pointing toward the first ramp ring (40), and the first overrun ramp (64) and/or the second overrun ramp (64) are/is inclined in a circumferential direction relative to the axial direction (72) by a mean overrun angle α such that, during overrun operation, the first ramp ring (40) is rotated relative to the second ramp ring (42) counter to the spring force of the spring device (46), and
wherein the first ramp ring (40) has a first traction ramp (74) pointing away from the second ramp ring (42) and/or the second ramp ring (42) has a second traction ramp (74) pointing away from the first ramp ring (40), and the first traction ramp (74) and/or the second traction ramp (74) are/is inclined in the circumferential direction relative to the axial direction (78) by a mean traction angle β such that, during traction operation, the first ramp ring (40) and the second ramp ring (42) are pulled toward one another, **characterized in that** the spring device (46) has at least one first spring element (48) and at least one second spring element (50), wherein the first ramp ring (42) and the second ramp ring (42) are arranged in an axial direction between the first spring element (48) and the second spring element (50).

2. Decoupler according to Claim 1, **characterized in that**, by way of the first traction ramp (74), a first wedge (77) pointing toward the second ramp ring (42) is designed for threading into the second ramp ring (42), and/or, by way of the second traction ramp (74), a second wedge (77) pointing toward the first ramp ring (42) is designed for threading into the first ramp ring (40).

3. Decoupler according to Claim 1 or 2, **characterized in that** the first traction ramp (74) forms a first receiving pocket (79) for receiving a second wedge (77), delimited by the second traction ramp (74), of the second ramp ring (42), and/or the second traction ramp (74) forms a second receiving pocket (79) for receiving a first wedge (77), delimited by the first traction ramp (74), of the first ramp ring (40).

4. Decoupler according to one of Claims 1 to 3, **characterized in that**, for the magnitude of the mean overrun angle α, the following applies: 3° ≤ |α| ≤ 45°.

5. Decoupler according to one of Claims 1 to 4, **characterized in that**, for the magnitude of the mean overrun angle α, the following applies: 25° ≤ |α| ≤ 30°, and/or, for the magnitude of the mean traction angle β, the following applies: 3° ≤ |β| ≤ 5°.

6. Decoupler according to one of Claims 1 to 5, **characterized in that** the first ramp ring (40) and/or the second ramp ring (42) are/is produced from a plastics material.

7. Decoupler according to Claim 6, **characterized in that** the plastics material is fibre-reinforced.

8. Decoupler according to one of Claims 1 to 7, **characterized in that** the first ramp ring (40) and/or the second ramp ring (42) has a friction-reducing material in the region of the overrun ramp (64) and/or in the region of the traction ramp (74).

9. Decoupler according to Claim 8, **characterized in that** the friction-reducing material has PTFE.

10. Belt pulley damper for the damping of rotary oscillations in a torque provided by a driveshaft of a motor vehicle, having a hub (12) for connection to the drive shaft, having a belt pulley (22) for driving auxiliary assemblies via a traction mechanism, having an input flange (36) which is rotatable relative to the belt pulley (22) and which serves for the introduction of a torque into the belt pulley (22), having an energy storage element which is connected between the input flange (36) and the belt pulley (22) and which serves for transmitting a torque from the input flange (36) to the belt pulley (22), and having a decoupler (38) according to one of Claims 1 to 9 which is coupled to the hub (12) and to the input flange (36).

11. Belt pulley damper according to Claim 10, **characterized in that** the energy storage element is a bow spring (34).

12. Belt pulley damper according to Claim 10 or 11, **characterized in that** the belt pulley (22) is mounted in relatively rotatable fashion on the hub (12) by way of a radial bearing (24), wherein the radial bearing (24) is in the form of a rolling bearing.

13. Belt pulley damper according to one of Claims 10 to 12, **characterized in that** the belt pulley (22) forms a sealed receiving chamber (32) which receives the energy storage element (34), wherein the receiving chamber (32) contains a lubricant, and the decoupler (38) is arranged entirely within the receiving chamber (32).

14. Belt pulley damper according to Claim 13, **characterized in that** the lubricant is a lubricating grease.

## Revendications

1. Découpleur pour l'amortissement d'une transmission de couple entre un arbre d'entraînement d'un véhicule automobile et une poulie (22) pour l'entraînement de groupes auxiliaires à l'aide d'un moyen de traction, avec
une première bague de rampe (40) pour l'introduction d'un couple fourni par l'arbre d'entraînement,
une deuxième bague de rampe (42) engrenant avec la première bague de rampe (40) pour la transmission d'un couple à une bride d'entrée (36) d'une unité de poulie (10), et
au moins un système de ressorts (46) pour la compression axiale de la première bague de rampe (40) et de la deuxième bague de rampe (42),
dans lequel la première bague de rampe (40) présente une première rampe de poussée (64) tournée vers la deuxième bague de rampe (42) et/ou la deuxième bague de rampe (42) présente une deuxième rampe de poussée (64) tournée vers la première bague de rampe (40) et la première rampe de poussée (64) et/ou la deuxième rampe de poussée (64) sont inclinées en direction périphérique par rapport à la direction axiale (72) d'un angle de poussée moyen α, de telle manière qu'en fonctionnement de poussée la première bague de rampe (40) tourne par rapport à la deuxième bague de rampe (42) contre la force élastique du système de ressorts (46), et
dans lequel la première bague de rampe (40) présente une première rampe de traction (74) détournée de la deuxième bague de rampe (42) et/ou la deuxième bague de rampe (42) présente une deuxième rampe de traction (74) détournée de la première bague de rampe (40) et la première rampe de traction (74) et/ou la deuxième rampe de traction (74) sont inclinées en direction périphérique par rapport à la direction axiale (78) d'un angle de traction moyen β, de telle manière qu'en fonctionnement de traction la première bague de rampe (40) et la deuxième bague de rampe (42) soient attirées l'une sur l'autre,
**caractérisé en ce que** le système de ressorts (46) présente au moins un premier élément de ressort (48) et au moins un deuxième élément de ressort (50), dans lequel la première bague de rampe (42) et la deuxième bague de rampe (42) sont disposées en direction axiale entre le premier élément de ressort (48) et le deuxième élément de ressort (50).

2. Découpleur selon la revendication 1, **caractérisé en ce qu'**un premier coin (77) tourné vers la deuxième bague de rampe (42) est formé à l'aide de la première rampe de traction (74) en vue de l'insérer dans la deuxième bague de rampe (42) et/ou un deuxième coin (77) tourné vers la première bague de rampe (42) est formé à l'aide de la deuxième rampe de traction (74) en vue de l'insérer dans la première bague de rampe (40).

3. Découpleur selon la revendication 1 ou 2, **caractérisé en ce qu'**une première poche de réception (79) destinée à recevoir un deuxième coin (77) de la deuxième bague de rampe (42) limité par la deuxième rampe de traction (74) est formée par la première rampe de traction (74) et/ou une deuxième poche de réception (79) destinée à recevoir un premier coin (77) de la première bague de rampe (40) limité par la première rampe de traction (74) est formée par la deuxième rampe de traction (74).

4. Découpleur selon l'une quelconque des revendications 1 à 3, **caractérisé en ce que** l'on a la relation 3° ≤ |α| ≤ 45° pour la valeur de l'angle de poussée moyen α.

5. Découpleur selon l'une quelconque des revendications 1 à 4, **caractérisé en ce que** l'on a la relation 25° ≤ |α| ≤ 30° pour la valeur de l'angle de poussée moyen α ou la relation 3° ≤ |β| ≤ 5° pour la valeur de l'angle de traction moyen β.

6. Découpleur selon l'une quelconque des revendications 1 à 5, **caractérisé en ce que** la première bague de rampe (40) et/ou la deuxième bague de rampe (42) sont fabriquées en un matériau de matière plastique.

7. Découpleur selon la revendication 6, **caractérisé en ce que** le matériau de matière plastique est renforcé par des fibres.

8. Découpleur selon l'une quelconque des revendications 1 à 7, **caractérisé en ce que** la première bague de rampe (40) et/ou la deuxième bague de rampe (42) présentent un matériau réduisant la friction dans la région de la rampe de poussée (64) et/ou dans la région de la rampe de traction (74).

9. Découpleur selon la revendication 8, **caractérisé en ce que** le matériau réduisant la friction présente du PTFE.

10. Amortisseur de poulie pour l'amortissement de vibrations de rotation d'un couple fourni par un arbre d'entraînement d'un véhicule automobile, avec un moyeu (12) pour la liaison avec l'arbre d'entraînement, une poulie (22) pour l'entraînement de groupes auxiliaires à l'aide d'un moyen de traction, une bride d'entrée (36) pouvant tourner par rapport à la poulie (22) pour l'introduction d'un couple dans la poulie (22), un élément d'accumulation d'énergie interposé entre la bride d'entrée (36) et la poulie (22) pour la transmission d'un couple de la bride d'entrée (36) à la poulie (22) et un découpleur (38) selon l'une quelconque des revendications 1 à 9 couplé au moyeu (12) et à la bride d'entrée (36).

11. Amortisseur de poulie selon la revendication 10, **caractérisé en ce que** l'élément d'accumulation d'énergie est un ressort en arc (34).

12. Amortisseur de poulie selon la revendication 10 ou 11, **caractérisé en ce que** la poulie (22) est montée sur le moyeu (12) de façon relativement rotative au moyen d'un palier radial (24), dans lequel le palier radial (24) est un palier de roulement.

13. Amortisseur de poulie selon l'une quelconque des revendications 10 à 12, **caractérisé en ce que** la poulie (22) forme une chambre de réception étanche (32) contenant l'élément d'accumulation d'énergie (34), dans lequel la chambre de réception (32) contient un agent lubrifiant et le découpleur (38) est disposé entièrement à l'intérieur de la chambre de réception (32).

14. Amortisseur de poulie selon la revendication 13, **caractérisé en ce que** l'agent lubrifiant est une graisse lubrifiante.
